Europäisches Patentamt

European Patent Office

Office européen des brevets

(19)

(11) Numéro de publication : **0 439 396 A2**

(12) **DEMANDE DE BREVET EUROPEEN**

(21) Numéro de dépôt : **91400134.2**

(22) Date de dépôt : **22.01.91**

(51) Int. Cl.⁵ : **B23P 19/04**

(30) Priorité : **24.01.90 FR 9000787**

(43) Date de publication de la demande :
**31.07.91 Bulletin 91/31**

(84) Etats contractants désignés :
**BE DE ES GB IT**

(72) Inventeur : **Thurier, Yvan**
**6, rue des Charmes**
**F-94320 Thiais (FR)**

(74) Mandataire : **Ernst-Schonberg, Michel et al**
**REGIE NATIONALE DES USINES RENAULT**
**SA, Sce 0267, 860, quai de Stalingrad**
**F-92109 Boulogne Billancourt Cédex (FR)**

(71) Demandeur : **RENAULT AUTOMATION**
**8/10 avenue Emile Zola**
**F-92109 Boulogne-Billancourt (FR)**

(54) **Procédé et dispositif d'assemblage de deux pièces devant être emboitées l'une dans l'autre comme une queue de soupape et une collerette ou coupelle.**

(57)    Procédé et dispositif d'assemblage de deux pièces devant être emboîtées l'une dans l'autre, comme une queue de soupape et une collerette ou coupelle, la liaison se faisant par emboîtement de gorges et de reliefs prévus respectivement sur l'une des pièces et sur un intercalaire en plusieurs parties cunéiformes (12, 13) dont les faces inclinées coopèrent avec une surface de même inclinaison de l'une des pièces à assembler, les parties cunéiformes (12, 13) cannelées intérieurement sont d'abord dilatées par une force radiale contre un appui périphérique, grâce à quoi, on introduit dans l'axe de ces parties, la tige (14) cannelée extérieurement, puis sont progressivement resserrées avec emboîtement des gorges et des reliefs par déplacement relatif desdites parties cunéiformes et de la collerette (11).

Application aux soupapes de moteurs et engins similaires.

Figure 6

EP 0 439 396 A2

# PROCEDE ET DISPOSITIF D'ASSEMBLAGE DE DEUX PIECES DEVANT ETRE EMBOITEES L'UNE DANS L'AUTRE, COMME UNE QUEUE DE SOUPAPE ET UNE COLLERETTE OU COUPELLE

Pour solidariser une tige de soupape de la coupelle ou collerette, prévue pour constituer l'appui du ressort de rappel de la soupape, on utilise généralement une pièce intermédiaire cunéiforme constituée par deux demi-cônes qui se juxtaposent dans la coupelle et y bloquent la queue de soupape en se coinçant entre celle-ci et la surface interne conique de la coupelle. Afin d'assurer le bon maintien de la coupelle sur la queue de soupape, il était usuel de munir la queue d'une gorge annulaire dans laquelle venait s'engager une saillie prévue sur la face interne des demi-cônes.

Le montage s'effectuait en général simplement par enfoncement à force de la coupelle dans laquelle les demi-cônes étaient au préalable déposés.

Mais dans les pratiques actuelles des raisons de fiabilité de l'assemblage ont conduit à multiplier et à porter généralement à trois le nombre de gorges. Il s'ensuit que le montage, surtout en processus automatique, devient beaucoup plus délicat en raison du grand nombre de possibilités de coincement dans des positions incorrectes. Le problème n'est alors résolu que par une modification des phases opératoires. Les demi-cônes ne sont plus déposés dans la coupelle avant la mise en place de celle-ci, mais déposés après le positionnement de cette coupelle. Dans ce cas, la mise en place de la coupelle et des demi-cônes n'est plus simultanée.

Le procédé qui fait l'objet de la présente invention remédie à cet inconvénient en permettant l'insertion correcte des deux demi-cônes qui ont été préalablement introduits dans la coupelle.

Ce procédé est d'ailleurs d'application générale et convient à l'assemblage de deux pièces (pièce extérieure et pièce intérieure) devant être solidarisées l'une dans l'autre par emboîtement de gorges et saillies, prévues respectivement sur l'une des pièces et sur un intercalaire en plusieurs parties cunéiformes dont les faces inclinées coopèrent avec une surface de même inclinaison de l'une des pièces à assembler.

Il se caractérise en ce que les parties cunéiformes cannelées intérieurement, sont d'abord dilatées dans un champ de forces radiales contre un appui périphérique, grâce à quoi on introduit par un déplacement relatif la pièce intérieure cannelée, dans l'une desdites parties, jusqu'à coïncidence des plans des cannelures et reliefs et finalement on refoule en bloc lesdites parties et la pièce intérieure dans le trou de la pièce extérieure ce qui assure l'emboîtement des cannelures et des reliefs.

L'invention s'étend au dispositif destiné à la mise en oeuvre de ce procédé, dispositif qui se prête à l'automatisation.

Ce dispositif comprend la combinaison d'un bloc adapté pour constituer, à l'une de ses extrémités, un appui pour la pièce extérieure ou collerette dans laquelle sont introduits les demi-cônes, ledit bloc étant muni à proximité immédiate dudit appui d'un chambrage de diamètre élargi, sur la périphérie duquel sont répartis les organes générateurs des forces radiales, de moyens pour produire un mouvement relatif entre ledit bloc et la tige placée dans l'axe de la pièce extérieure, d'un poussoir pouvant coulisser axialement dans ledit bloc, ledit poussoir étant lui-même en deux parties concentriques, dont les diamètres respectifs sont adaptés pour venir s'appuyer sélectivement d'une part sur les demi-cônes maintenus dans le chambrage par les organes générateurs des forces radiales et d'autre part sur l'extrémité de la tige, et des moyens pour solidariser, dans une première phase la partie externe du poussoir avec le bloc, puis dans une deuxième phase les deux parties du poussoir entre elles de manière à repousser en même temps les demi-cônes et la tige à l'intérieur de la pièce externe, le décalage entre les deux phases étant tel que la deuxième phase a lieu quand les gorges et les reliefs respectifs des demi-cônes et de la tige sont en regard les uns des autres.

Le moyen de solidarisation peut-être constitué par des billes placées dans des orifices radiaux de la patie externe du poussoir et coopérant, selon la position de cette partie, soit avec une encoche pratiquée dans le bloc, soit avec une autre encoche pratiquée dans la partie interne du poussoir à un niveau plus proche de la tête du poussoir.

Pour engendrer les forces radiales on utilise avec avantage des aimants (ou électro-aimants), répartis à la périphérie du chambrage de dilatation, quand les parties cunéiformes sont en métal ferro-magnétique.

Mais on peut aussi utiliser des forces radiales produites autrement, notamment par dépression, grâce à des ajoutages répartis autour du chambrage.

Dans la description qui va suivre en regard du dessin annexé, donné à titre d'exemple, on considérera l'application particulière de l'invention à la fixation d'une queue de soupape de moteur sur la coupelle ou collerette formant l'appui du ressort de soupape.

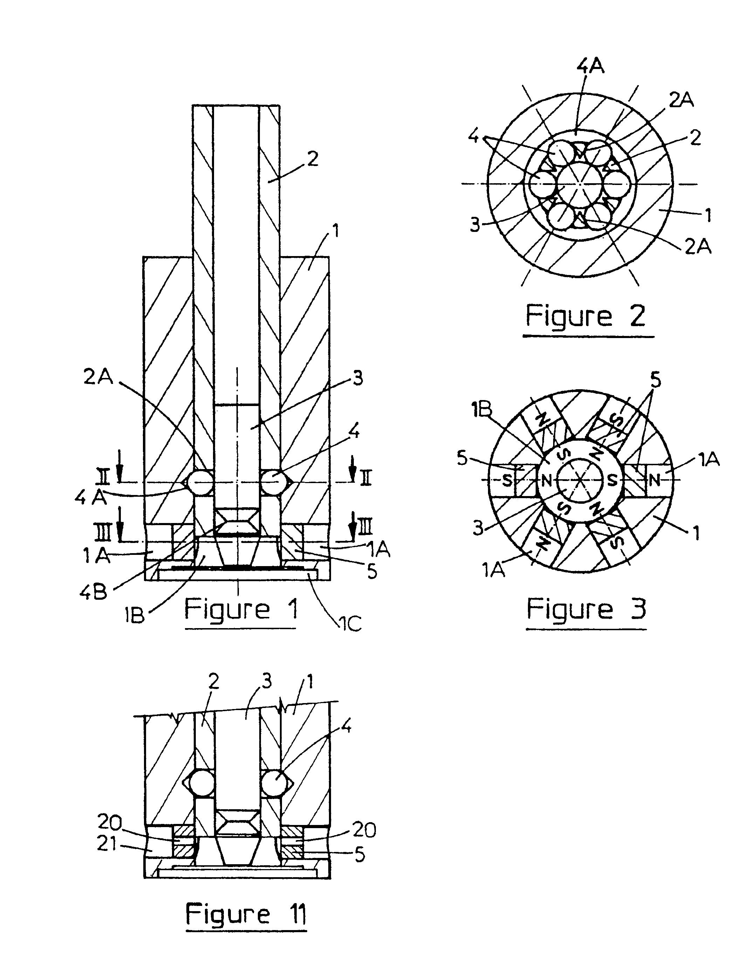

La figure 1 est une vue en coupe axiale du bloc et du poussoir.

Les figures 2 et 3 en sont des coupes selon II-II et III-III.

Les figures 4 à 9 représentent le dispositif en coupe axiale dans des positions successives de fonctionnement.

La figure 10 montre en coupe axiale l'assemblage terminé.

La figure 11 montre une variante.

Le dispositif représenté sur le dessin comporte trois éléments télescopiques à savoir un bloc 1 percé d'un alésage central, un manchon 2 pouvant coulisser dans ledit alésage et un piston 3 pouvant coulisser dans le manchon 2, l'ensemble du manchon 2 et du piston 3 constituant un poussoir qui fonctionne en deux temps comme on l'expliquera ci-après.

L'extrémité inférieure du piston 3 a une forme conique.

A une extrémité le bloc 1 comporte une partie conformée 1C qui constitue un appui pour la collerette ou coupelle.

Le fourreau 1 comporte six alésages radiaux 1A opposés deux à deux qui reçoivent six aimants 5, disposés en faisant alterner les pôles Nord et Sud de façon à créer un maximum de flux vers l'axe du système.

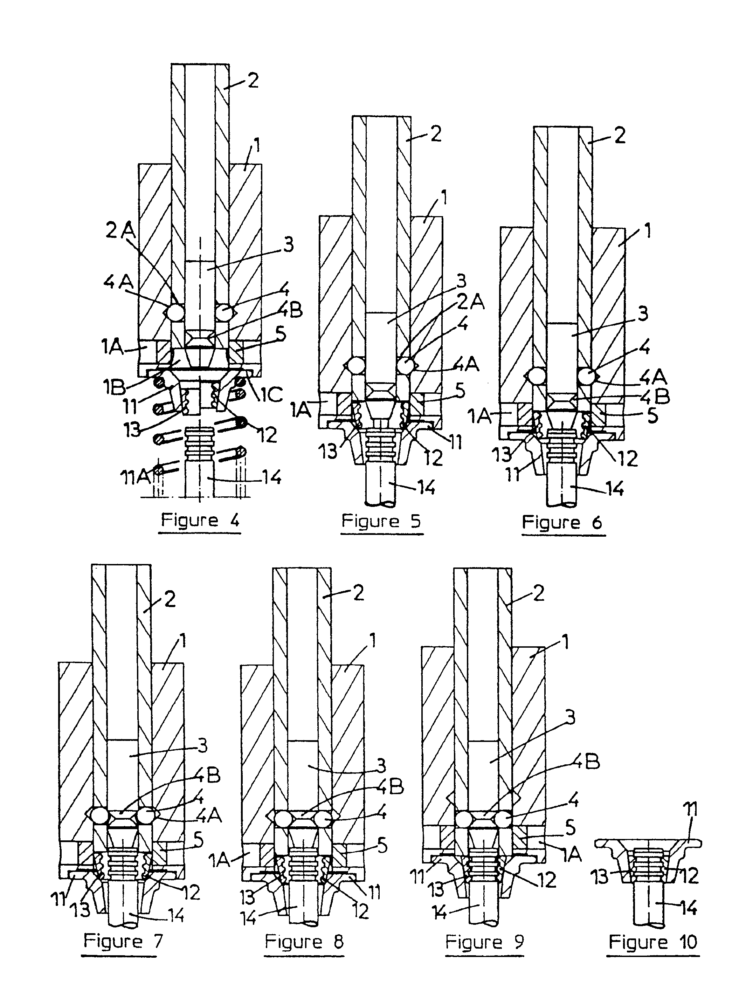

Dans le manchon 2 sont pratiqués six alésages radiaux 2A opposés deux à deux dans lesquels sont disposées six billes 4 qui, selon la position relative des pièces, coopèrent soit avec une gorge 4A pratiquée dans le fourreau 1 (position des figures 4 à 6), soit avec une gorge 4B pratiquée sur le piston 3 (position des figures 8 et 9).

Les figures 4 à 9 permettent de comprendre le fonctionnement du dispositif.

Sur la figure 4 la coupelle 11 est représentée en appui sur la surface d'extrémité 1C du fourreau 1. Elle peut être maintenue par une pince (non représentée).

Les deux demi-cônes 12 et 13 qui ont préalablement été introduits dans la coupelle 11 sont portés par celle-ci. Il est à noter que la position relative de ces deux demi-cônes importe peu. L'ensemble est placé dans l'axe de la queue de soupape 14 par le robot qui le porte par le manchon 2, le ressort de rappel 11A de la soupape étant en place autour de la tige pour appui sur la coupelle 11. Le manchon 2 et le fourreau 1 sont liés axialement par l'intermédiaire des six billes 4.

Les figures 5 à 9 représentent les positions relatives successives des divers éléments au cours de la descente du manchon 2 que les billes 4 solidarisent au bloc 1 dans cette phase.

Dans ce mouvement relatif du bloc 1 et de la queue de soupape 14, cette queue pousse les demi-cônes 12, 13 vers le haut, de sorte que ces demi-cônes pénètrent dans le chambrage de grand diamètre 1B où la force magnétique des aimants 5 les écarte l'un de l'autre en dilatant le passage régnant entre eux ; les demi-cônes sont finalement plaqués contre les aimants (figures 5 à 8).

La figure 6 montre le piston 3 qui arrive en contact avec l'extrémité de la queue de soupape. Les deux demi-cônes étant suffisamment écartés pour ne pas toucher la queue de soupape, celle-ci pénètre entre les aimants.

Sur la figure 7, on voit le piston 3 arrêté par la queue de soupape tandis que le bloc 1 continue sa descente. Les billes 4 commencent à pénétrer dans la gorge annulaire du piston 3. Le bloc 1 commence à remonter.

La figure 8 correspond à un état transitoire où le bloc 1 est libéré tandis que le poussoir 3 se retrouve lié axialement avec le manchon 2. Ainsi, le manchon 2 est arrêté dans sa descente et sa face inférieure localise axialement les reliefs des demi-cônes en face des gorges de la queue de soupape. Dans la suite du mouvement relatif, les demi-cônes 12 et 13 sont rapprochés par l'alésage conique de la coupelle 11.

La figure 9 montre la position relative stable des divers éléments en fin de descente du manchon 2.

La figure 10 montre l'assemblage terminé et séparé du dispositif d'insertion.

Sur la figure 11 qui est une vue partielle d'une variante, on voit que les aimants 5 précédemment décrits sont remplacés par des ajoutages 20 reliés à une source en dépression communiquant avec l'amont 21 de ces ajoutages et non dessinée. La dépression arrivant sur ces ajoutages plaque contre eux les demi-cônes 12 et 13 quand ils pénètrent dans le chambrage 1B. Le fonctionnement est le même que précédemment.

**Revendications**

1.  Procédé d'assemblage de deux pièces devant être solidarisées l'une dans l'autre, telle une tige dans une collerette, par emboîtement à gorges et reliefs prévus respectivement sur l'une des pièces et sur un intercalaire en plusieurs parties cunéiformes, dont des faces inclinées coopèrent avec une surface d'un logement annulaire de même inclinaison de la pièce externe à assembler, selon lequel on assure d'abord une sortie axiale des dites parties cunéiformes (12-13) hors de leur logement (11) dans lequel elles sont été initialement placées, avec écartement radial des dites pièces cunéiformes (12-13) jusqu'a un appui périphérique, alors que la pièce interne (14) est engagée librement au travers de la pièce externe (11) au delà de sa position d'assemblage définitif, en ce qu'on rétracte ensuite simultanément la pièce interne (14) et les parties cunéiformes (12-13) dans leur position axiale relative définitive d'assemblage avec emboîtement serré des gorges et reliefs des parties cunéiformes (12-13) autour de la pièce interne (14) et serrage conique des faces externes desdites pièces cunéiformes (12-13) dans le logement de la pièce externe (11), caractérisé en ce que l'on assure l'écartement radial des pièces cunéiformes (12-13) jusqu'à leur appui périphérique par l'action de forces radiales à action centrifuge.

2.  Procédé selon la revendication 1, caractérisé en ce que l'on génère les forces radiales à action centrifuge par voie magnétique ou électromagnétique.

3. Procédé selon la revendication 1, caractérisé en ce que l'on génère les forces radiales à action centrifuge par dépression côté externe des pièces cunéiformes (12-13).

4. Dispositif d'assemblage de deux pièces (11-14) devant être solidarisées, l'une (14) dans l'autre (11), tel une tige, par exemple une tige de soupape, dans une collerette, par exemple une coupelle de soupape, du genre comprenant un bloc (1) présentant à l'une de ses extrémités un appui axial destiné à coopérer avec ladite pièce extérieure (11) conformée intérieurement pour recevoir les dites parties cunéiformes intercalaires (12-13), ledit bloc (1) présentant à proximité dudit appui (11) un chambrage (1B) de diamètre élargi, des moyens pour produire un mouvement relatif entre le bloc (1) et la pièce interne (14) engagée au travers de la pièce externe (11), avec un poussoir creux (2) pouvant coulisser axialement dans ledit bloc (1), dont une partie frontale externe est adaptée à venir en appui d'immobilisation sélectif sur les dites particules cunéiformes (12-13) tout en se laissant traverser par ladite partie interne à assembler (14) jusqu'à une position de concordance axiale d'assemblage entre la dite pièce interne (14) et les dites parties cunéiformes (12-13), caractérisé en ce que le poussoir (2) incorpore un piston coulissant (3), tandis que des moyens de verrouillage libérables par poussée axiale sont ménagés entre le corps de poussoir (2) et le bloc (1) d'une part et entre le corps de poussoir (2) et le piston (3) d'autre part.

5. Dispositif d'assemblage selon la revendication 4, caractérisé en ce que les moyens de verrouillages comprennent un jeu de billes (4) placées dans des perforations radiales (2A) du poussoir (2) coopérant soit avec des gorges de verrouillage (4A) pratiquées dans le bloc (1), soit avec une gorge de verrouillage (4B) pratiquée dans le piston (3).

6. Dispositif d'assemblage selon la revendication 4 ou 5, caractérisé par des moyens de déplacement radial à action centrifuge destinés à agir sur les dites parties cunéiformes (12-13) et agencées à la périphérie externe du chambrage (1B).

7. Dispositif d'assemblage selon la revendication 6, caractérisé en ce que les moyens de déplacement radial à action centrifuge sont des aimants (5) dans des logements radiaux (1A) au niveau axial du chambrage élargi (1B).

8. Dispositif d'assemblage selon la revendication 6, caractérisé en ce que les moyens de déplacement radial à action centrifuge sont des ajutages de dépressurisation agencés au travers de la paroi du chambrage élargi (1B).

Figure 1

Figure 2

Figure 3

Figure 11

Figure 4

Figure 5

Figure 6

Figure 7

Figure 8

Figure 9

Figure 10